Europäisches Patentamt

**European Patent Office**

Office européen des brevets

(11) Numéro de publication:

# 0049194
# A1

(12) **DEMANDE DE BREVET EUROPEEN**

(21) Numéro de dépôt: **81401474.2**

(22) Date de dépôt: **23.09.81**

(51) Int. Cl.³: **C 08 J 3/28**, C 08 J 9/14 // C08L61/06

---

(30) Priorité: **23.09.80 FR 8020864**

(43) Date de publication de la demande: **07.04.82** **Bulletin 82/14**

(84) Etats contractants désignés: **AT BE CH DE GB IT LI LU NL SE**

(71) Demandeur: **STRATIFORME Société Anonyme, 26 Route Nationale, F-59235 Bersee (Nord) (FR)**

(72) Inventeur: **Savey, Claude, 21 route Nationale, F-59235 Bersee (Nord) (FR)**
Inventeur: **Desmazieres, Michel, 129 rue Nationale, F-59147 Gondecourt (Nord) (FR)**
Inventeur: **Laurent, Florent, 17 route Nationale, F-59235 Bersee (Nord) (FR)**

(74) Mandataire: **Lepage, Jean-Pierre, c/o BUGNION 23/25, rue N. Leblanc, F-59011 Lille Cedex - (Nord) (FR)**

---

(54) **Procédé de polycondensation d'une composition à base de résine thermodurcissable.**

(57) On mélange à la composition de manière homogène une substance présentant des atomes polaires, on soumet le mélange à des moyens ondulatoires électriques ou électromagnétiques agissant plus particulièrement sur les atomes polaires, ce qui provoque leur échauffement.

La composition à base de résine thermodurcissable peut contenir un agent porogène et éventuellement des charges.

Les moyens ondulatoires préférés sont un four à micro-ondes ou un four à très haute fréquence.

EP 0 049 194 A1

0049194

L'invention est relative à un procédé de polycondensation et d'une composition à base de résine thermodurcissable.

L'invention concerne notamment mais non exclusivement un procédé de polycondensation d'une composition à base de résine phénolique, de résine phénolique expansée éventuellement chargée.

Pour réaliser la polycondensation d'une composition à base de résine thermodurcissable, il est nécessaire de chauffer la composition à une température au moins égale à la température de polycondensation. Les moyens de chauffage utilisés d'une manière courante sont des moyens extérieurs qui agissent sur la composition par conduction ou par rayonnement. Par exemple, ces moyens de chauffage peuvent consister pour une composition à base de résine thermodurcissable polycondensée dans un moule en des résistances noyées dans la paroi du moule.

De tels moyens de chauffage extérieurs présentent l'inconvénient que la chaleur doit être propagée depuis l'extérieur vers l'intérieur de la composition. Il existe donc dans la composition des gradients de température. Cette température n'étant pas homogène dans la composition, la polycondensation ne se réalise pas dans les meilleures conditions.

De manière à réduire au maximum les gradients de température dans la composition, l'élévation de température est très lente ce qui donne des temps de fabrication très longs et donc une immobilisation longue du moule dans le cas où la composition est moulée.

Cet inconvénient est surtout sensible dans le cas où la résine est expansée. En effet, l'expansion étant provoquée par l'ébullition d'un agent porogène, et donc par chauffage, il est très difficile d'obtenir par des moyens de chauffage extérieurs une expansion homogène de la résine.

Pour remédier à cet inconvénient, on a utilisé un agent porogène dont la température d'ébullition, supérieure à la température atmosphérique, était inférieure à la température de polycondensation de la résine. Il a été ainsi possible de dissocier les phases d'expansion et de polycondensation.

Cependant, les temps de fabrication sont encore très longs, de l'ordre de deux à trois heures du fait que la température doit être élevée très progressivement.

Dans le cas d'une résine expansée chargée, par exemple de billes de verre ou d'un matériau expansé tel que des billes de polystyrène expansé, d'argile expansé, l'ensemble étant destiné à réaliser un matériau isolant thermique, il est difficile de provoquer et d'accélérer la propa-

BAD ORIGINAL

gation de la chaleur dans la composition, étant données les caractéristiques thermo-isolantes des différents composants de leur mélange.

Dans le cas d'une résine expansée chargée, étant donné le temps de fabrication long, la concentration des charges n'est pas homogène dans le produit final, en effet, compte tenu de leur densité par rapport au mélange et du temps de réaction, celles-ci ont tendance à se déplacer dans le mélange.

Un des buts de la présente invention est de proposer un procédé de polycondensation d'une composition à base de résine thermodurcissable qui soit beaucoup plus rapide que les procédés antérieurs et qui de ce fait remédie aux inconvénients de ces procédés antérieurs.

Un autre but de la présente invention est de proposer un procédé de polycondensation qui améliore encore l'homogénéité de l'expansion de la résine dans le cas où elle est expansée et l'homogénéité de la réaction de polycondensation.

D'autres buts et avantages de la présente invention apparaîtront au cours de la description qui va suivre, qui n'est cependant donnée qu'à titre indicatif et qui n'a pas pour but de limiter l'invention.

Le procédé de polycondensation d'une composition à base de résine thermodurcissable, notamment mais non exclusivement à base de résine phénolique est caractérisé par le fait que l'on mélange à la composition de manière homogène une substance présentant des atomes polaires, on soumet le mélange à des moyens ondulatoires électriques ou électromagnétiques agissant plus particulièrement sur les atomes polaires et provoquant leur échauffement, la chaleur se propageant par conduction et/ou par rayonnement à partir des atomes polaires dans l'ensemble du mélange.

Ainsi, selon la présente invention, le chauffage n'est pas réalisé par des moyens extérieurs agissant par rayonnement ou par conduction, mais par des moyens agissant sur des particules en suspension dans la composition, qu'ils échauffent, et qui échauffent à leur tour l'ensemble de la composition par conduction et/ou par rayonnement.

Ainsi, la composition est chauffée directement dans la masse. L'échauffement est donc homogène, les gradients de température sensiblement nuls si la substance présentant des atomes polaires a été mélangée de manière homogène. Du fait de cette homogénéité de la température dans la composition, il est possible de réaliser beaucoup plus rapidement la polycondensation de la résine que dans les procédés antérieurs. En particulier, dans le cas où la résine est expansée, il est possible de réaliser

BAD ORIGINAL

beaucoup plus rapidement d'une part la phase d'expansion, d'autre part la phase de polycondensation de la résine.

Comme moyens ondulatoires électriques ou électromagnétiques, l'invention propose un four à micro-ondes ou un four à très haute fréquence. Ces moyens agissent plus particulièrement sur des atomes polaires, c'est-à-dire des atomes qui, dans leur liaison moléculaire, attirent sur eux le nuage électronique et constituent avec d'autres atomes des molécules polaires. A titre d'exemple non limitatif, on peut citer, comme atomes polaires, des atomes d'oxygène, de chlore, d'azote, etc.

Ainsi, selon la présente invention, on prépare tout d'abord une composition à base de résine thermodurcissable, par exemple à base de résine phénolique. Cette composition contient des produits à la portée de l'Homme de l'Art, tel qu'un agent de catalyse et éventuellement d'autres additifs. Elle peut contenir par ailleurs un agent porogène de manière à expanser la résine. Avantageusement, dans le cas où un agent porogène est utilisé, sa température est inférieure à la température de polycondensation de la résine. La composition peut également contenir des charges, telles que par exemple des billes de verre ou des billes d'une matière expansée telles que des billes de polystyrène.

Le procédé est particulièrement avantageux pour réaliser la polycondensation d'une composition à base de résine phénolique, contenant un agent porogène et des charges telles que des billes de polystyrène. En effet, cette composition est bien connue pour ses qualités thermo-isolantes et le procédé selon la présente invention permet d'éviter le contraste des procédés antérieurs selon lesquels cette composition destinée à réaliser un matériau isolant thermique était chauffée par rayonnement ou par conduction depuis l'extérieur. Dans le cas présent, au contraire, par addition d'une substance présentant des atomes polaires, cette composition est chauffée depuis l'intérieur, par conduction et/ou par rayonnement à partir de particules en suspension présentant des atomes polaires.

Il faut remarquer que d'un point de vue théorique, la résine en elle-même n'est pas sensible aux moyens ondulatoires tels que des micro-ondes ou un rayonnement à très haute fréquence car elle ne contient pas d'atome polaire. Cependant, les résines thermodurcissables actuellement disponibles commercialement ont une composition qui n'est généralement pas connue de leur utilisateur, mais seulement du fabricant. Il se peut donc que des additifs ou des éléments de la résine présentent des atomes

0049194

polaires, ce qui ne présente pas d'inconvénient dans le procédé selon la présente invention.

A la composition, il est ajouté une substance présentant des atomes polaires. Comme substance, on peut ajouter par exemple l'eau, dont les atomes polaires sont les atomes d'oxygène. Cette substance est mélangée de manière homogène à la composition de base. Le mélange est soumis ensuite aux moyens ondulatoires électriques ou électromagnétiques tels qu'un four à micro-ondes ou à très haute fréquence. De ce fait, les atomes polaires sont excités et s'échauffent. Ils réchauffent par conduction et/ou par rayonnement l'ensemble du mélange, la température d'ébullition de la substance est supérieure à la température de polycondensation de la résine.

Dans le cas d'une résine sans agent porogène, cet échauffement produit directement la polycondensation de la résine. Il faut remarquer que la montée en température, compte tenu de la répartition homogène des atomes polaires dans la composition, peut être effectuée beaucoup plus rapidement que selon les procédés antérieurs, et que la réaction de la polycondensation est beaucoup plus rapide.

Il faut remarquer par ailleurs que cette réaction étant généralement exothermique, il peut suffire uniquement d'amorcer la réaction par les moyens ondulatoires, la réaction s'entretenant ensuite d'elle-même.

Dans le cas d'une résine présentant un agent porogène, le chauffage par conduction et/ou par rayonnement à partir des atomes polaires provoque tout d'abord l'ébullition de l'agent porogène, dont la température d'ébullition est inférieure à la température de polycondensation de la résine. Lorsque l'expansion est totale, le chauffage provoque la polycondensation de la résine. L'expansion et la polycondensation peuvent être réalisées beaucoup plus rapidement que selon les procédés antérieurs, étant donné la répartition homogène des atomes polaires dans la composition. En particulier, il pourra ne plus être nécessaire de dissocier les phases d'expansion et de polycondensation, comme le proposaient certains procédés antérieurs et de réaliser ces deux phases en continuïté.

Les procédés antérieurs proposaient également de réaliser ces deux phases en continuïté. Cependant, il est essentiel de remarquer qu'étant donné que les moyens de chauffage utilisés dans le cas présent sont beaucoup plus rapides que les moyens antérieurs et réalisent un chauffage homogène de la composition, les phases d'expansion et de poly-

BAD ORIGINAL

0049194

condensation sont en fait nettement séparées, et la polycondensation commence après la fin de l'expansion. L'expansion est donc homogène. Contrairement à cela, selon les procédés antérieurs en question, le chauffage étant beaucoup plus lent, ce qui fait que la polycondensation commençait en partie avant la totale expansion de la composition. L'expansion n'était donc pas homogène et la polycondensation et l'expansion se mélangeaient de manière confuse.

D'autre part, dans les procédés antérieurs, l'eau que la présente invention se propose d'ajouter à la composition, était considérée comme inhibiteur de réaction et on cherchait à l'éliminer. Dans le cas présent au contraire, elle favorise la réaction.

La présence de charges dans la composition ne présente pas d'inconvénient pour le présent procédé. Il faut remarquer qu'un agent tensio-actif pourra être ajouté à la composition, de manière à réaliser un enrobage des charges, comme dans les procédés antérieurs. Cependant, dans certaines conditions, cet agent tensio-actif pourra être absent.

D'autre part, dans le cas d'une résine chargée, il risquait de se produire dans les procédés antérieurs, un phénomène de décantation, dû à la différence de densité entre les charges et la résine. Par exemple, dans le cas de charges en polystyrène, ces dernières tendaient à remonter à la surface de la résine. Par contre, dans le cas présent, compte tenu de la rapidité de la réaction, ce phénomène de décantation est totalement évité, et la répartition des charges dans la composition est parfaitement uniforme.

Il faut remarquer que l'eau qui est ajoutée à la composition en tant que substance présentant des atomes polaires est chauffée et peut être chauffée jusqu'à évaporation. Ce phénomène n'est pas gênant, au contraire, il peut être favorisé par une aspiration par le vide, qui favorise également l'expansion homogène du mélange.

Dans le cas d'une résine expansée, l'agent porogène, naturellement, présente une température d'ébullition inférieure à la température d'évaporation de la substance présentant des atomes polaires.

Par ailleurs, dans le cas de l'eau, ou plus généralement d'une substance, son évaporation diminue la concentration en atomes polaires, et donc diminue le chauffage de la composition par les moyens ondulatoires. Cependant, comme il a été dit précédemment, la polycondensation de la résine est une réaction exothermique et la chaleur dégagée compense cette diminution. La température d'ébullition de la substance présentant

BAD ORIGINAL

des atomes polaires est naturellement supérieure à la température de
polycondensation de la résine, de manière à amorcer au moins cette
réaction avant évaporation.

Par ailleurs, dans le cas d'une composition destinée à former
un corps composé d'une résine expansée, éventuellement chargée et enveloppée d'une peau étanche en résine, par exemple en disposant la composition dans un moule dont les parois sont enduites de résine thermodurcissable, la polymérisation de la résine au niveau de la peau est retardée
de manière à permettre l'évaporation de la substance présentant les atomes
polaires, et par exemple de l'eau. Ce retard est réalisé en utilisant
pour la peau une résine exempte d'atomes polaires qui sera donc chauffée
par conduction depuis l'intérieur par la composition destinée à former
le corps. Les moyens ondulatoires réaliseront donc tout d'abord l'expansion puis la polycondensation de la composition qui forme le corps. La
chaleur échauffera par conduction la résine de la peau qui se polymérisera
avec retard, c'est-à-dire après expansion, polycondensation et la composition du corps et éventuellement évaporation de la substance présentant
des atomes polaires.

Dans le cas d'une résine expansée, à laquelle est appliqué le
présent procédé, trois températures interviennent. Ces trois températures
sont la température d'ébullition de l'agent porogène, qui est inférieure
à la température de polycondensation de la résine, elle-même inférieure
à la température d'évaporation de la substance présentant les atomes
polaires. En réalisant un vide plus ou moins poussé autour de la composition, il est possible de faire varier la température d'ébullition de
l'agent porogène et de la substance présentant des atomes polaires. Il
est don possible de faire varier l'ensemble de ces températures les unes
relativement aux autres et de les ajuster de manière à avoir une réaction
optimale.

Un exemple va maintenant être donné de manière à illustrer non
limitativement la présente invention. La composition, dans cet exemple,
est destinée à réaliser un enrobage thermo-isolant d'une canalisation
par exemple d'évacuation d'eau. La composition de base contient une résine
du type phénolique, commercialement disponible, un catalyseur également
commercialement disponible. La résine est chargée de billes de polystyrène,
par exemple, 100 grammes de billes de polystyrène peuvent être ajoutés
à 400 grammes de résine.

Un agent porogène est ajouté à la composition, dans une propor-

BAD ORIGINAL

tion de 5 à 20 %. Cet agent est de type trifluorotrichloroéthane. La température d'ébullition de cet agent porogène est de 47 °C à pression normale, et peut être abaissée jusqu'à 40 °C sous vide.

La température de polycondensation de la résine est de l'ordre de 60 à 70 °C.

Comme substance présentant des atomes polaires, on a ajouté de l'eau, dans une proportion de 1 à 2 %. Il faut remarquer que la résine peut contenir également de l'eau. La composition exacte de la résine est en effet généralement mal connue de l'utilisateur.

Le mélange homogène est réalisé, et placé dans un moule qui entoure la canalisation. Les parois du moule sont enduites de résine phénolique catalysée, mais exempte d'agent porogène et d'eau. Le moule est en plusieurs parties, et présente des ouvertures ou des fentes qui permettront à l'eau de s'évaporer en cours de réaction. L'ensemble est placé dans un four à micro-ondes présentant une fréquence d'environ 2450 MHz. Le four est mis en route, et un vide partiel est réalisé. Ce vide a pour but d'éliminer les vapeurs d'eau qui s'échapperont en cours de réaction, mais également d'éliminer les vapeurs d'autres éléments tels que le formol, qui sont dégagées par la réaction de polycondensation. Le vide est de l'ordre de 600 mm Hg. Le moule est mis en rotation dans le four à une vitesse d'environ deux tours par minute. Cette rotation améliore encore l'homogénéité de la répartition des charges dans la composition.

Le four est mis en action, ce qui provoque l'échauffement des molécules d'eau.

Ces molécules d'eau par conduction ou par rayonnement échauffent en particulier l'agent porogène, qui lorsque la température est égale ou supérieure à 47 °C bout. Ceci provoque l'expansion de la composition qui peut être constatée par la surabondance de résine au niveau des plans de joints.

La température du mélange continue à monter, et lorsqu'elle atteint 60 à 70 °C la polycondensation de la résine se réalise.

Parallèlement à la fin de l'expansion et au moins au début de la polycondensation, la température de l'eau a atteint sa température d'ébullition et l'eau s'évapore. Elle est aspirée par le vide, et traverse la résine dont les parois sont enduites. En effet, cette résine étant exempte en particulier d'eau, elle atteint sa température de polycondensation après expansion et polycondensation de la résine centrale.

BAD ORIGINAL

Il faut remarquer que la polycondensation de la résine étant une réaction exothermique, l'évaporation de l'eau ne provoque pas de baisse de température sensible du mélange.

L'expansion et la polycondensation de la résine ont duré de 9 à 12 minutes, ce qui est beaucoup plus rapide que les procédés antérieurs pour lesquels cette durée pouvait atteindre quelques heures.

Cette période d'une dizaine de minutes est naturellement fonction de la puissance disponible par unité de masse à polycondenser.

Par ailleurs, en réalisant une coupe dans le matériau thermo-isolant ainsi réalisé, il a pu être constaté la parfaite homogénéïté de la répartition des charges dans la résine. La rapidité de la réaction, ainsi que la rotation du moule ont en effet évité la décantation de la résine par rapport aux charges qu'elle contient.

Naturellement, la description du procédé qui vient d'être faite, n'est donnée qu'à titre indicatif, et l'on pourrait adopter d'autres mises en oeuvre de la présente invention, sans pour autant sortir du cadre de celle-ci. En particulier, il serait possible d'adapter la présente invention à de nombreuses compositions à base de résine thermodurcissable, éventuellement armée de fibres de verre. Il serait également possible d'appliquer le procédé selon la présente invention dans le cas d'une composition à base de résine pour laquelle l'élévation de température accélère la réaction de polycondensation.

REVENDICATIONS

1. Procédé de polycondensation d'une composition à base de résine thermodurcissable, notamment mais non exclusivement à base de résine phénolique, caractérisé par le fait que l'on mélange à la composition de manière homogène, une substance présentant des atomes polaires, on soumet le mélange à des moyens ondulatoires électriques ou électromagnétiques agissant plus particulièrement sur les atomes polaires, ce qui provoque leur échauffement, la chaleur se propageant par conduction et/ou par rayonnement à partir des atomes polaires dans l'ensemble du mélange.

2. Procédé de polycondensation selon la revendication 1, caractérisé par le fait que l'on réalise au moins l'amorçage de la réaction de polycondensation de la résine par les moyens ondulatoires électriques ou électromagnétiques, la réaction s'entretenant ensuite au moins partiellement d'elle-même du fait de son caractère exothermique.

3. Procédé de polycondensation d'une composition à base de résine thermodurcissable, notamment mais non exclusivement à base de résine phénolique contenant un agent porogène pour expanser la résine et éventuellement des charges, selon les revendications 1 ou 2, caractérisé par le fait que l'on choisit un agent porogène de température d'ébullition inférieure à la température de polycondensation de la résine et inférieure à la température d'évaporation de la substance présentant des atomes polaires, on soumet le mélange aux dits moyens ondulatoires électriques ou électromagnétiques de manière à provoquer à partir des atomes polaires par conduction et/ou par rayonnement l'ébullition de l'agent porogène puis la polycondensation de la résine expansée.

4. Procédé de polycondensation selon l'une quelconque des revendications précédentes, caractérisé par le fait que l'on provoque l'élimination au moins partielle de la substance présentant des atomes polaires par son évaporation sous l'action des moyens ondulatoires électriques ou électromagnétiques.

5. Procédé de polycondensation selon la revendication 4, caractérisé par le fait que l'on réalise autour de la composition un vide au moins partiel de manière à faciliter l'élimination de la substance présentant des atomes polaires évaporés.

6. Procédé de polycondensation d'une composition à base de résine thermodurcissable expansée, éventuellement chargée, destinée à former un corps composé de résine expansée et éventuellement chargée, enveloppé

BAD ORIGINAL

0049194

d'une peau étanche en résine thermodurcissable, caractérisé par le fait que l'on retarde la polymérisation de la résine au niveau de la peau en utilisant pour le corps une composition additionnée d'une substance présentant des atomes polaires et pour la peau une composition exempte de substance présentant des atomes polaires, de manière, en particulier, à permettre l'élimination de la substance présentant des atomes polaires par évaporation.

7. Procédé de polycondensation selon l'une quelconque des revendications précédentes, caractérisé par le fait que l'on modifie la température d'évaporation de la substance présentant des atomes polaires, la température de polycondensation de la résine et éventuellement la température d'ébullition de l'agent porogène les unes par rapport aux autres par un vide plus ou moins poussé.

8. Procédé de polycondensation selon l'une quelconque des revendications précédentes, caractérisé par le fait que l'on choisit les atomes polaires parmi les atomes d'oxygène, de chlore, d'azote.

9. Procédé de polycondensation selon l'une quelconque des revendications précédentes, caractérisé par le fait que l'on utilise l'eau comme substance présentant des atomes polaires.

10. Procédé de polycondensation selon l'une quelconque des revendications précédentes, caractérisé par le fait que les moyens ondulatoires électriques ou électromagnétiques consistent en un four à microondes.

11. Procédé de polycondensation selon l'une quelconque des revendications 1 à 10, caractérisé par le fait que les moyens ondulatoires électriques ou électromagnétiques consistent en un four à très haute fréquence.

12. Procédé de polycondensation selon l'une quelconque des revendications précédentes, caractérisé par le fait que l'on place le mélange dans un moule rotatif.

**0049194**

Numéro de la demande

EP 81 40 1474

Office européen
des brevets

**RAPPORT DE RECHERCHE EUROPEENNE**

| | **DOCUMENTS CONSIDERES COMME PERTINENTS** | | CLASSEMENT DE LA DEMANDE (Int. Cl.³) |
|---|---|---|---|
| Catégorie | Citation du document avec indication, en cas de besoin, des parties pertinentes | Revendication concernée | |
| X | <u>US - A - 4 018 642</u> (R.L. PIKE et al.) <br> * Revendications 1,2,4 * <br><br> -- | 1,9, 10,11 | C 08 J 3/28 <br> 9/14// <br> C 08 L 61/06 |
| X | <u>DE - A - 1 544 609</u> (Dr. K. ARNDT) <br> * Revendications 1-5 * <br><br> -- | 1,3,8 | |
| X | <u>US - A - 3 821 337</u> (E.J. BUNCLARK et al.) <br> * Revendication 1 * <br><br> -- | 1,10, 11 | |
| X | <u>GB - A - 607 690</u> (DUNLOP) <br> * Revendications 1,7; page 2, lignes 84-94 * <br><br> -- | 1,8 | **DOMAINES TECHNIQUES RECHERCHES (Int. Cl.³)** <br><br> C 08.J 3/28 <br> 9/22 <br> 9/00 <br> 9/14 <br> C 08 G 85/00 |
| X | <u>FR - A - 1 300 107</u> (EMIL VOGEL GmbH) <br> * Résumé 1,2; page 1, lignes 19-31 * <br><br> -- | 1 | |
| X | <u>FR - A - 2 424 807</u> (J.P. SAUNIER) <br> * Revendications 1,2; page 3, ligne 37 - page 4, ligne 9 * <br><br> -- | 1,2,4 | **CATEGORIE DES DOCUMENTS CITES** |
| | <u>FR - A - 2 413 198</u> (STRATIFORME) <br> * En entier * <br><br> -- <br><br> ./. | 3,5, 6,7 | X: particulièrement pertinent <br> A: arrière-plan technologique <br> O: divulgation non-écrite <br> P: document intercalaire <br> T: théorie ou principe à la base de l'invention <br> E: demande faisant interférence <br> D: document cité dans la demande <br> L: document cité pour d'autres raisons |

Le présent rapport de recherche a été établi pour toutes les revendications

&: membre de la même famille, document correspondant

| Lieu de la recherche | Date d'achèvement de la recherche | Examinateur |
|---|---|---|
| La Haye | 05-01-1982 | HALLEMEESCH |

OEB Form 1503.1   06.78

Office européen
des brevets

**RAPPORT DE RECHERCHE EUROPEENNE**

| | **DOCUMENTS CONSIDERES COMME PERTINENTS** | | **CLASSEMENT DE LA DEMANDE (Int. Cl. 3)** |
|---|---|---|---|
| Catégorie | Citation du document avec indication, en cas de besoin, des parties pertinentes | Revendication concernée | |
| | US - A - 4 202 945 (F.J. LEINHARDT)<br>* Revendications 5,9-12; colonne 3, ligne 61 - colonne 4, ligne 10 *<br><br>-- | 1-3,6 | |
| | DE - C - 918 324 (R. KURTH)<br>* En entier *<br><br>-- | 3 | |
| | FR - A - 1 297 604 (B.A.S.F.)<br>* Résumé; page 1, paragraphe 4 *<br><br>-- | 1,9 | **DOMAINES TECHNIQUES RECHERCHES (Int. Cl. 3)** |
| P | FR - A - 2 455 062 (R. BOSCH)<br>* Revendications 1,2; exemple *<br><br>---- | 1,8, 10,11 | |